Europäisches Patentamt

(19) European Patent Office

Office européen des brevets

(11) Numéro de publication: **0 223 625**
**B1**

(12) **FASCICULE DE BREVET EUROPEEN**

(45) Date de publication du fascicule du brevet:
**24.05.89**

(21) Numéro de dépôt: **86401980.7**

(22) Date de dépôt: **10.09.86**

(51) Int. Cl.⁴: **B29C 67/18,** B29C 37/00,
B29C 45/14

(54) Procédé de moulage de pièces en matériau plastique et produits obtenus par ce procédé.

(30) Priorité: **13.09.85 FR 8514149**

(43) Date de publication de la demande:
**27.05.87 Bulletin 87/22**

(45) Mention de la délivrance du brevet:
**24.05.89 Bulletin 89/21**

(84) Etats contractants désignés:
**DE GB IT**

(56) Documents cités:
**EP-A- 0 140 496**
**FR-A- 1 434 373**
**FR-A- 1 477 501**
**GB-A- 1 368 600**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Coffy, Didier, Jean-Raymond, 63, rue de la
Porte de Paris, F-78460 Chevreuse(FR)**

(74) Mandataire: **Boivin, Claude, 9, rue Edouard-Charton,
F-78000 Versailles(FR)**

**Description**

L'invention concerne un procédé de moulage de pièces en matériau plastique selon le préambule de la revendication 1 et les produits obtenus par ce procédé selon le préambule de la revendication 4 et comme décrits dans le document FR-A 1 434 373.

Le moulage d'une pièce en matériau de synthèse est délicat lorsque l'épaisseur des pièces ne leur donne pas une tenue suffisante. Il se forme alors après démoulage et refroidissement de la pièce des déformations, notamment des ondulations, qui ne sont pas admissibles sur des pièces d'aspect telles que des éléments de carrosserie automobile.

L'invention a pour objet un procédé de moulage de pièces en matériau plastique comportant un insert destiné à éviter les déformations se produisant après démoulage et refroidissement.

Il est connu d'insérer à cet effet dans le moule un élément rigide, mais il est généralement nécessaire de donner à cet insert une inertie suffisamment importante ce qui conduit à une épaisseur de l'insert souvent incompatible avec les dimensions de la pièce et donc du moule.

C'est ainsi que le document FR-A 1 434 373 décrit un procédé pour créer dans une masse de matériau un ensemble de contraintes de compression permanentes, dans lequel on chauffe le matériau pour lui donner la forme d'une masse fluide pâteuse ou pulvérulente, on y incorpore des fils d'un matériau différent ayant un coefficient de dilatation thermique supérieur à celui du matériau formant ladite masse par exemple des fils d'acier, et on refroidit la masse jusqu'à une température inférieure à sa température de solidification.

Pour y remédier, le procédé selon l'invention se caractérise en ce que l'insert est constitué d'un élément mince bimétallique constitué de deux feuilles métalliques de coefficients de dilatation différents, cet élément étant préchauffé avant d'être disposé dans le moule, ledit élément étant positionné dans le sens où sa tendance à la déformation de la pièce.

On évite ainsi le remède habituel qui consiste à donner au moule un galbe différent de celui de la pièce que l'on veut obtenir pour tenir compte des déformations se produisant au démoulage. Ce galbe s'obtient par une retouche du moule, généralement empirique, qui est longue et coûteuse et dont le résultat est imparfait et quelque peu aléatoire, faute de pouvoir déterminer avec précision le contre-galbe qui permettrait d'obtenir une pièce correcte.

De préférence les deux feuilles de l'insert sont assemblées à une température ambiante et sous déformation élastique avant d'être préchauffées puis positionnées dans le moule.

L'invention a également pour objet les pièces en matériau plastique comportant comme insert un élément mince bimétallique constitué de deux feuilles métalliques de coefficient de dilatation différents disposé longitudinalement à l'intérieur de la pièce, exerçant sur le plastique qui l'enrobe, une contrainte qui en modifie le galbe.

On a décrit ci-après, à titre d'exemple non limitatif, un mode de mise en œuvre du procédé conforme à l'invention ainsi que les pièces réalisées par ce procédé.

La Figure 1 est une vue longitudinale de l'insert bimétallique assemblé à température ambiante;

La Figure 2 est une vue longitudinale du même insert à la température de préchauffage;

La Figure 3 est une vue schématique de la mise en place de l'insert dans le moule;

La Figure 4 est une vue schématique en coupe de la pièce obtenue.

L'insert 1 est constitué de deux feuilles métalliques 2 et 3 réalisées dans des métaux présentant des coefficients de dilatation différents.

Les métaux utilisés peuvent être du même type que les métaux utilisés dans les bilames classiques.

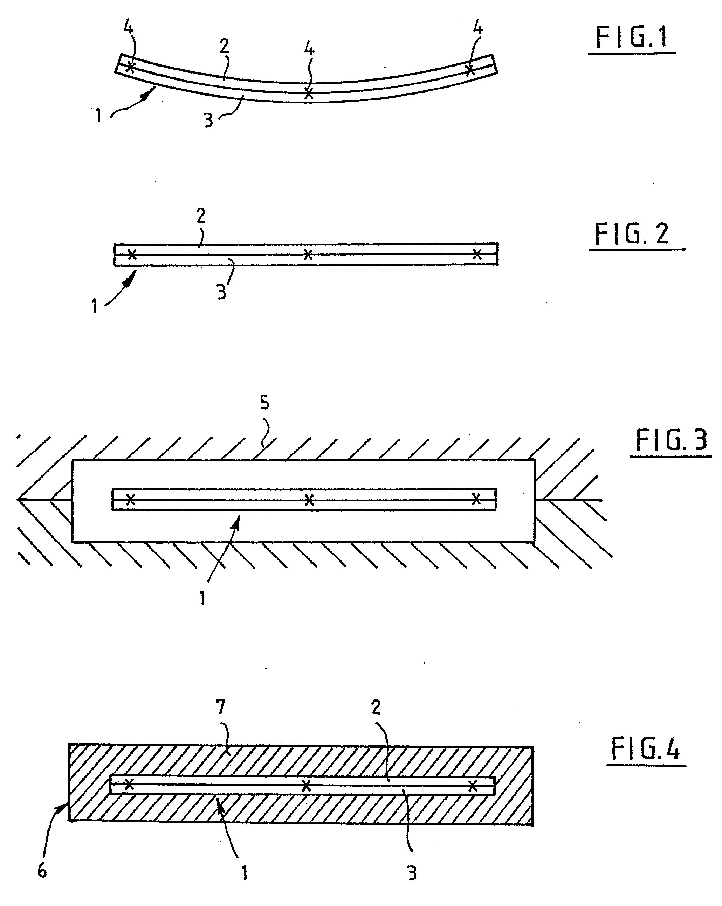

A température ambiante (20°C) le bilame assemblé présente une forme incurvée. Cette forme est obtenue en déformant de façon élastique, avant assemblage, les deux feuilles disposées l'une contre l'autre. Après cette déformation on assemble les deux feuilles par quelques points de soudure 4 (Figure 1).

Le coefficient de dilatation de la lame 2 disposée du côté du centre de courbure étant plus élevé que celui de l'autre lame, l'ensemble reprendra après chauffage, à une temtérature de l'ordre de 100°C, la configuration plane représentée en Figure 2.

On introduit alors l'insert préchauffé 1 dans le moule 5 (Figure 3) juste avant la fermeture du moule et l'injection du plastique. L'insert est disposé dans le sens où sa tendance à la déformation lors du refroidissement s'exercera dans le sens opposé à celui de la tendance à la déformation de la pièce 6. Si, par exemple, la pièce 6 tend à prendre une forme concave ayant sa concavité tournée vers le bas, on disposera l'insert 1 dans la position de la Figure 2 dans laquelle il tend en se refroidissant à prendre une forme concave ayant sa concavité tournée vers le haut, comme le montre la Figure 1.

Après injection puis refroidissement du matériau plastique, la température atteignant environ 20°C, l'insert exerce donc sur le matériau plastique 7 de la pièce 6 une contrainte propre à corriger le galbe et à redonner à la pièce l'aspect souhaité représenté en Figure 4.

Il va de soi que la présente invention ne doit pas être limitée au mode de réalisation décrit. C'est ainsi qu'on a représenté au dessin une pièce plane et donc un insert plan à la température de préchauffage. Bien entendu la pièce 6 pourrait prendre une toute autre forme pourvu qu'elle présente deux faces courbes sensiblement parallèles, les faces du bilame étant alors parallèles à ces faces lorsqu'il est inséré dans le moule.

**Revendications**

1. Procédé de moulage de pièces en matériau plastique comportant un insert destiné à éviter les déformations se produisant après démoulage et refroidissement, caractérisé en ce que l'insert (1) est constitué d'un élément mince bimétallique (2, 3) constitué de deux feuilles métalliques (2, 3) de coefficients de dilatation différents, cet élément étant préchauffé avant d'être disposé dans le moule, ledit.

élément étant positionné dans le sens où sa tendance à la déformation lors du refroidissement s'exerce dans le sens opposé à celui de la tendance à la déformation de la pièce (6).

2. Procédé de moulage selon la revendication 1, caractérisé en ce que les feuilles métalliques (2, 3) de l'insert sont assemblées à température ambiante et sous déformation élastique avant d'être préchauffées puis positionnées dans le moule (5).

3. Procédé de moulage selon la revendication 2, caractérisé en ce que les deux feuilles métalliques (2, 3) sont assemblées par des points de soudure (4).

4. Pièce moulée en matériau plastique de forme allongée comportant un insert métallique (1) caractérisé en ce que l'insert (1) est un élément mince bimétallique constitué de deux feuilles métalliques (2, 3) de coefficients de dilatation différents disposé longitudinalement à l'intérieur de la pièce (6), exerçant sur le plastique qui l'enrobe, une contrainte qui en modifie le galbe.

## Claims

1. Method of moulding plastic material parts comprising an insert for avoiding deformations occurring after removal from the mould and cooling characterized in that the insert (1) is formed of a thin bimetal element (2, 3) formed of two metal foils (2, 3) having different expansion coefficients, this element being pre-heated before being disposed in the mould, said element being positioned in the direction where its tendency to deformation during cooling is exerted in the direction opposite that of the tendency to deformation of the part (6).

2. Moulding method according to claim 1, characterized in that the metal foils (2, 3) of the insert are assembled at ambient temperature and with resilient deformation before being pre-heated then positioned in the mould (5).

3. Moulding method according to claim 2, characterized in that the two metal foils (2, 3) are assembled together by spot welds (4).

4. Moulded plastic material part of elongate shape comprising a metal insert (1), characterized in that the insert (1) is a thin bimetal element formed of two metal foils (2, 3) having different expansion coefficients disposed longitudinally inside the part (6), exerting on the plastic which surrounds it, a stress which modifies the curved shape thereof.

## Patentansprüche

1. Verfahren zum Formen von Bauteilen aus Kunststoff, die ein Einsatzstück aufweisen, zur Vermeidung von nach dem Ausformen und Abkühlen entstehenden Verformungen, dadurch gekennzeichnet, daß das Einsatzstück (1) als dünnes Bimetallelement (2, 3) ausgebildet ist, bestehend aus zwei Metallblättern (2, 3) mit unterschiedlichen Ausdehnungskoeffizienten und daß dieses Bimetallelement vor dem Einsetzen in die Form vorgewärmt und dann so angeordnet wird, daß seine Verformungsneigung bei Abkühlung in entgegengesetzter Richtung wirksam ist wie die Verformungsneigung des Bauteils (6).

2. Verfahren nach Anspruch 1, dadurch gekennzeichnet, daß die Metallblätter (2, 3) des Einsatzstücks vor dem Vorwärmen bei Umgebungstemperatur unter elastischer Verformung zusammengefügt und dann in die Form (5) eingesetzt werden.

3. Verfahren nach Anspruch 2, dadurch gekennzeichnet, daß die beiden Metallblätter (2, 3) mit Schweißpunkten (4) zusammengefügt werden.

4. Aus Kunststoff geformtes langgestrecktes Bauteil mit metallischem Einsatzstück (1), dadurch gekennzeichnet, daß das Einsatzstück (1) ein dünnes Bimetallelement (2, 3) ist, das aus zwei Metallblättern (2, 3) mit unterschiedlichen Ausdehnungskoeffizienten besteht und in Längsrichtung im Inneren des Bauteils (6) angeordnet ist, wobei es auf das umgebende Kunststoffmaterial eine formändernde Beanspruchung ausübt.

FIG.1

FIG.2

FIG.3

FIG.4